**Europäisches Patentamt**

**European Patent Office**

**Office européen des brevets**

(11) Veröffentlichungsnummer: **0 012 392**
**B1**

(12) **EUROPÄISCHE PATENTSCHRIFT**

(45) Veröffentlichungstag der Patentschrift:
**29.12.82**

(21) Anmeldenummer: **79105003.2**

(22) Anmeldetag: **07.12.79**

(51) Int. Cl.³: **F 16 C 27/02,** F 16 C 33/26,
F 16 C 33/10, F 04 D 29/04

(54) **Foliengleitlager, insbesondere für Chemiepumpen.**

(30) Priorität: **08.12.78 DE 2853146**

(43) Veröffentlichungstag der Anmeldung:
**25.06.80 Patentblatt 80/13**

(45) Bekanntmachung des Hinweises auf die Patenterteilung:
**29.12.82 Patentblatt 82/52**

(84) Benannte Vertragsstaaten:
**FR GB IT**

(56) Entgegenhaltungen:
**FR-A-1 454 024**
**FR-A-2 352 983**
**FR-A-2 352 985**
**US-A-3 366 427**
**US-A-3 375 046**
**US-A-3 951 474**
**US-A-3 957 317**

(73) Patentinhaber: **Franz Klaus Union Armaturen Pumpen
GmbH & Co., Blumenfeldstrasse 18,
D-4630 Bochum 1 (DE)**

(72) Erfinder: **Potrykus, Franz, Universitätsstrasse 75,
D-4630 Bochum 1 (DE)**

(74) Vertreter: **Kalkoff, Heinz-Dieter et al, Patentanwälte
Wenzel & Kalkoff Postfach 2448 Auf Steinhausen 1,
D-5810 Witten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Foliengleitlager, insbesondere für Chemiepumpen

Die Erfindung betrifft ein Foliengleitlager, insbesondere für durch die zu pumpende Flüssigkeit zu schmierende stopfbüchslose Chemiepumpen (Spaltrohrpumpen), mit einer zwischen einem Lagerzapfen oder einer Welle und einem gleichachsigen zylindrischen oder leicht konischen Lagergehäuse vorgesehenen Lagerhülse, an der mehrere sich in Umfangsrichtung erstreckende Gleitfolienabschnitte aus Kunststoff jeweils in Drehrichtung gesehen am vorderen Ende in in der Lagerhülse ausgebildeten Axialschlitzen gehalten sind.

Foliengleitlager, die auch Schlitzringlager genannt werden, bestehen in der einfachsten Ausführung aus einem Folienstreifen von der Breite des Lagers und der Länge des Umfanges abzüglich dem Stoßspiel. Der Folienstreifen wird in eine entsprechende Eindrehung in der Lagerschale bzw. in der Lagerhülse eingelegt. Die Foliendicke beträgt üblicherweise 1,5 mm. Die Tiefe der Eindrehung entspricht etwa der halben Foliendicke. Das Stoßspiel von etwa der halben Foliendicke ist notwendig, um die Wärmedehnung des Lagers nicht zu behindern.

Da der Folienabschnitt die Welle bzw. den Lagerzapfen annähernd vollständig umschlingt, weist ein Foliengleitlager dieser einfachen Bauart ähnliche Eigenschaften wie ein übliches Gleitlager auf, lediglich die Erneuerung der Lauffläche durch Auswechseln des Folienabschnittes ist sehr vereinfacht. Aus einem Folienband, das als Meterware vorliegt, können Folienabschnitte nach Bedarf zugeschnitten werden. Das Betriebslagerspiel ist also relativ eng, so daß es zu einer Berührung zwischen dem Laufkörper, also der Welle oder dem Lagerzapfen und dem Folienabschnitt kommen kann, wenn Verschmutzungen und dergleichen im Schmiermedium auftreten, was häufig der Fall ist, da die Schmierung mit dem geförderten Medium erfolgt. Als Werkstoff dienen vornehmlich gefüllte PTFE-Typen.

Neben diesen sehr einfachen Foliengleitlager sind weitere Typen bekannt (z. B. US-A-3 957 317 oder FR-A-1 454 024), bei denen um den Umfang verteilt mehrere Folienabschnitte vorhanden sind, die schuppenartig übereinander liegen. Das führt insbesondere bei Folienabschnitten, die sich mehrfach überlappen, zu einer allgemeinen Starrheit der Lagerung, da die Bewegung der Folienabschnitte gegeneinander stark behindert ist und nach starken Kräften verlangt. Ein weiterer Nachteil dieser Lagertype besteht darin, daß nach einiger Betriebszeit diejenige Lagerstelle, die die Hauptlast der Lagerung aufnimmt, so weit verschlissen ist, daß die Folienabschnitte zu einer durchgehenden Fläche einnivelliert sind. In diesem Zustand weist diese Lagertype dieselben Laufeigenschaften auf, die auch bei Foliengleitlagern mit nur einem einzigen Folienabschnitt vorhanden sind, so daß der bauliche Aufwand entbehrlich ist, im Gegenteil, die verbleibende allgemeine Starrheit aufgrund der übereinander liegenden Folienabschnitte bleibt sogar erhalten.

Es ist demnach Aufgabe der Erfindung, ein Foliengleitlager so zu verbessern, daß es unempfindlich gegenüber einem größeren Lagerspiel ist und damit gute Anlauf- und Notlaufeigenschaften aufweist, ohne eine starre Lagerung in Kauf nehmen zu müssen.

Zur Lösung dieser Aufgabe wird vorgeschlagen, daß die Folienabschnitte am Außenumfang der Lagerhülse in nicht bis zu den Rändern der Lagerhülse reichenden Axialschlitzen gehalten sind, am hinteren Ende gegenüber den benachbarten Folienabschnitten ohne Überlappung einen Dehnungsspalt belassen und frei auf der Mantelfläche der Lagerhülse aufliegen können, daß die Lagerhülse mit dem Lagerzapfen bzw. mit der Welle drehfest verbunden ist, und daß zwischen den frei aufliegenden Folienabschnitten und der Lagerfläche des Lagergehäuses ein radiales Gleitspiel von etwa 0,3 – 1 mm vorgesehen ist.

Am Umfang der Lagerhülse sind also mehrere Folienabschnitte aus Kunststoff, insbesondere Silikonkunststoff oder Polytetrafluoräthylen, angeordnet, die mit der an dem Lagerzapfen bzw. an der Welle festgesetzten Lagerhülse umlaufen. Unabhängig von der Belastungsrichtung des Lagers werden dadurch alle Folienabschnitte einem gleichmäßigen Verschleiß unterworfen, so daß die Vorteile des Foliengleitlagers mit mehreren Folienabschnitten über die gesamte Betriebsdauer erhalten bleiben. Die Anordnung bewirkt eine sehr gute Zentrierung der Welle bzw. des Lagerzapfens, da sich die einzelnen Folienabschnitte aufgrund der Zentrifugalkraft aufstellen. Außerdem tritt eine stetige Selbstreinigung des Foliengleitlagers von Fremdkörpern durch den Auslauf bzw. den Neuanlauf der Welle bzw. des Lagerzapfens ein, da dabei eine Bewegung in radialer Richtung der einzelnen Folienabschnitte eintritt, die dazu führt, daß eventuell eingeklemmte Fremdkörper fortgespült werden. Darüber hinaus kann das Lagerspiel relativ groß gewählt werden, z. B. im Bereich von 0,3 – 1 mm, ohne an Lagerstabilität zu verlieren, da die Folienabschnitte aufgrund ihrer Zentrifugalkraft bedingten Aufstellung ein größeres Lagerspiel sehr gut überbrücken. Der bevorzugte Bereich des Lagerspiels liegt bei etwa 0,4 – 0,5 mm.

Die Vorteile des erfindungsgemäßen Foliengleitlagers kommen besonders dadurch zur Geltung, daß die Gleitfolienabschnitte in Umfangsrichtung ohne Überlappung hintereinanderliegen und zwischen benachbarten Gleitfolienabschnitten ein Dehnungsspalt vorhanden ist. Im Anlaufzustand sind dann Verhältnisse wie bei einem normalen Gleitlager vorhanden, allerdings mit einem verhältnismäßig großen Lagerspiel, das bei normalen Gleitlagern nicht verwirklicht werden kann.

Die vorderen Enden der Folienabschnitte reichen zweckmäßigerweise durch die Axialschlitze bis auf den Innenumfang der Lagerhülse, und die Axialschlitze sind schmaler als die Breite der Lagerhülse ausgebildet. Vorzugsweise ist jedes vordere Ende des Folienabschnittes auf die innere Umfangsfläche der Lagerhülse umgebogen. Dadurch bekommt sie einen sehr guten Halt. Die in Drehrichtung hintere Oberkante der Axialschlitze sollte mit einem großen Radius abgerundet sein, um einen guten Eintritt des Schmiermittels in den Raum zwischen der Außenfläche der Folienabschnitte und der inneren Lagerfläche des Lagergehäuses zu ermöglichen. Wenn zwischen den Axialschlitzen in bestimmtem Abstand Schmiermitteldurchtrittsbohrungen vorgesehen sind und die Lagerhülse derart ausgebildet ist, daß Schmiermittel in den Raum zwischen ihrem Innenumfang und der Welle bzw. den Lagerzapfen, beispielsweise durch einen dorthin in der Welle oder dem Lagerzapfen geführten Schmiermittelkanal, gelangen kann, strömt das Schmiermittel zwischen dem Außenumfang der Lagerbüchse und der Innenseite des hinteren Bereiches der Folienabschnitte entgegen der Drehrichtung aus und gelangt in den keilförmigen Spalt am vorderen Ende der Folienabschnitte, der sich zwischen deren Außenseite und der Lagerfläche des Lagergehäuses bildet.

Die Druckbeaufschlagung der Folienabschnitte durch das Schmiermittel, daß das Fördermedium sein kann und durch radiale Durchtrittsöffnungen in der Lagerhülse austritt, erfährt die erfindungsgemäße Lagerung in Verbindung mit den auftretenden Zentrifugalkräften eine wesentliche Stabilisierung. Zur Steigerung der Wirkung aufgrund der Zentrifugalkraft ist in Weiterbildung vorgesehen, daß am hinteren Ende der Folienabschnitte auf deren Innenseite achsparallel ein Stab zur Gewichtserhöhung eingebunden ist und auf dem Außenumfang der Lagerhülse eine die dadurch hervorgerufene Verdickung aufnehmende Längsnut ausgebildet ist. Diese Verhältnisse führen dazu, daß das Lager im normalen Betriebszustand berührungslos arbeitet, also einen Reibwert aufweist, der herkömmlich berührungslos arbeitenden Gleitlagern entspricht. Die Folienabschnitte des erfindungsgemäßen Lagers können ebenso von einem als Meterware vorliegenden Band zugeschnitten werden wie bei den bisher schon bekannten Foliengleitlagern.

In vielen Anwendungsfällen ist es erwünscht, wenn das Gleitlager nicht nur in radialer Richtung, sondern auch in axialer Richtung eine Fixierung des drehbaren Innenteils ermöglcht. Hierzu sieht eine weitere Ausgestaltung der Erfindung vor, daß die Folienabschnitte wenigstens an einer Seite axial über die Lagerhülse vorstehen und am Lagergehäuse wenigstens eine radiale Anlageschulter unmittelbar oder mittelbar ausgebildet ist. Gegen diese Schulter läuft das Lager mit den Folienabschnitten an.

Diese Gestaltung wird häufig an beiden Seiten der Lagerhülse vorzusehen sein, um eine Axialfixierung in beiden Richtungen zu erzielen.

Um besonders hohe Axialkräfte aufnehmen zu können, insbesondere bei axial unsymmetrisch belasteten Pumpen, ist es zweckmäßig, wenn an den Seiten der Folienabschnitte Radialstege angeformt sind, die an den Stirnflächen der Lagerhülse anliegen. Sie kommen mit den Anlageschultern des Lagergehäuses in Berührung. In bestimmten Fällen ist es günstig, wenn die Radialstege nicht nur vor die Stirnflächen der Lagerhülse, sondern auch radial über den Außenumfang vorstehen, wozu dann jedoch im Lagergehäuse eine entsprechende Ringnut vorzusehen ist.

Für eine gute Führung in axialer Richtung entlang den Folienabschnitten können diese an ihrer Unterseite mit Stegen versehen sein, die frei in einen Umfangsschlitz der Lagerhülse eingreifen. Die Stege können mittig oder auch außermittig zwischen den Enden vorgesehen sein. Diese sind ebenso mehrfach radial geschlitzt, um die Biegsamkeit der Folienabschnitte in sich nicht zu beeinträchtigen.

Ausführungsbeispiele der Erfindung sind anhand einer Zeichnung näher erläutert, in der zeigt

Fig. 1 im Längsschnitt und Querschnitt eine erste Ausführungsform des Gleitlagers,

Fig. 2 eine Draufsicht auf einen mit einem Beschwerungsstab versehenen Folienabschnitt in der Draufsicht und im eingebauten Zustand,

Fig. 3 eine Sonderausführung von Lagerhülse und Folienabschnitt,

Fig. 4 die Lagerung einer Welle zwischen konischen Gleitlagern,

Fig. 5 einen Folienabschnitt mit seitlichen Stegen in Draufsicht, Stirnansicht und Seitenansicht, und

Fig. 6 eine weitere Ausführungsform der Lagerhülse und des Folienabschnitts in Schnittdarstellung und Teilseitenansicht.

Ein Lagerzapfen 1 ist in einem Gehäuse 2 mit einer inneren Lagerfläche dadurch gelagert, daß auf ihn eine Lagerhülse 3 aufgezogen ist, welche auf ihrem Umfang mehrere Folienabschnitte 4 trägt. Die Lagerhülse 3 weist zur Befestigung der Folienabschnitte 4 fünf Axialschlitze 5, deren in Drehrichtung gesehen hinteren Oberkanten 6 stark abgerundet sind, auf. Die Axialschlitze 5 reichen nicht bis zu den Enden. Zwischen diesen Schlitzen 5 weist die Lagerhülse 3 jeweils Schmiermitteldurchtrittsöffnungen 7 auf. Es können mehrere in einer zum Axialschlitz 5 parallelen Anordnung vorgesehen sein. An den beiden Rändern stützt sich die Lagerhülse 3 mittels radial nach innen vorstehender Bunde 8 auf dem Lagerzapfen 1 ab. Dadurch ist ein Zwischenraum 9 zwischen dem inneren Umfang der Lagerhülse 3 und dem Außenumfang des Lagerzapfens 1 gebildet.

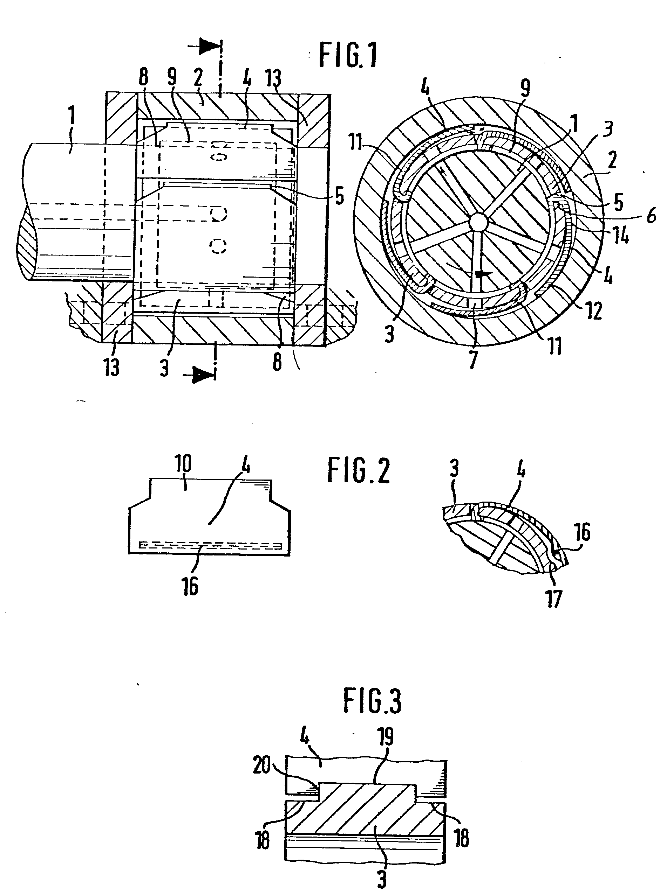

Die Folienabschnitte 4 sind an ihrem vorderen Ende zur Mitte hin abgesetzt und haben einen schrägen Übergang. Mit der danach gebildeten Zunge 10 am vorderen Ende 11 greifen sie durch die Axialschlitze 5 hindurch und sind innen auf die innere Umfangsfläche der Lagerhülse 3 umgebogen. Dadurch sind sie zwischen der Umfangsfläche des Lagerzapfens 1 und der Innenseite der Lagerhülse 3 ausreichend fest eingeklemmt. Die Folienabschnitte liegen am in Drehrichtung gesehenen hinteren Ende 12 frei auf der Außenumfangsfläche der Lagerhülse 3 auf und stellen sich im Betrieb aufgrund der Fliehkraftwirkung radial nach außen, wie dies in der Schnittansicht der Fig. 1 erkennbar ist.

Die Folienabschnitte 4 stehen seitlich etwas über die seitlichen Stirnflächen der Lagerhülse 3 hinweg, wie dies im Längsschnitt der Fig. 1 dargestellt ist. Dadurch können sie zur Axiallagerung und Fixierung des Wellenzapfens beitragen. Sie kommen zur Anlage an Anlageschultern, die durch seitliche Begrenzungsscheiben 13 des Lagergehäuses 2 gebildet sind, siehe Fig. 1, links.

Das Gleit- oder Lagerspiel 14 zwischen der äußeren Umfangsfläche der Folienabschnitte im eingebauten Zustand und der Lagerfläche des Lagergehäuses 2 beträgt 0,4 mm. Es kann jedoch auch größer sein, z. B. 1 mm. Da die Folien das Bestreben haben, sich bei Drehung nach außen zu stellen, wird das erhöhte Lagerspiel ausgeglichen. Die Länge der Folienabschnitte in Umfangsrichtung wird durch die Anzahl der verwendeten Folienabschnitte am Umfang bestimmt, wobei die Folien nicht aneinanderstoßen sollten. Vielmehr muß ein Dehnungsspalt verbleiben. Es ist unerheblich, ob die Verformung der Folienabschnitte entsprechend dem Lagerhülsenaußendurchmesser bzw. dem Lagergehäuseinnendurchmesser geometrisch genau vorgenommen wird oder nicht. Die Folienabschnitte müssen auch nicht in den Axialschlitzen befestigt sein, wenn das Lagerspiel gering genug und ein Übereinanderschieben der Folienabschnitte nicht möglich ist. Die Dicke der Folienabschnitte kann 1 bis 2 mm, im Mittel 1,5 mm betragen. Größere Dicken sind dann anwendbar, wenn die Elastizität der Folie bei Betriebstemperatur ausreichend groß ist, und ein ausreichendes Fliehkraftausstellen im Betrieb ermöglicht bleibt.

Bei der in Fig. 2 dargestellten Ausführungsform der Folienabschnitte 4 ist im hinteren Bereich ein Stab 16 eingebunden, wodurch sich auf der Innenseite eine Verdickung bildet, die von einer Längsnut 17 in der Lagerhülse 4 aufgenommen wird. Das durch den eingebundenen Stab 16 erhöhte Gewicht führt zu einer stärkeren Fliehkraft, die die Stabilisierung der Lagerung erhöht, weil sich das hintere Ende der Folienabschnitte feste gegen die Lagerflächen des Lagergehäuses anlegt.

Eine zusätzliche seitliche Sicherung des Folienabschnittes 4 kann, wie in Fig. 3 dargestellt, dadurch erreicht werden, daß die Lagerhülse 3 so ausgebildet ist, daß die Randzonen 18 in ihrem Durchmesser kleiner gehalten sind als der dazwischenliegende größere Mittelteil 19. Ist der Folienabschnitt 4 entsprechend der dargestellten Form der Lagerhülse 3 ausgebildet, hindern die äußeren Flanken 20 ein axiales Verschieben. Auch andere konstruktive Lösungen sind möglich.

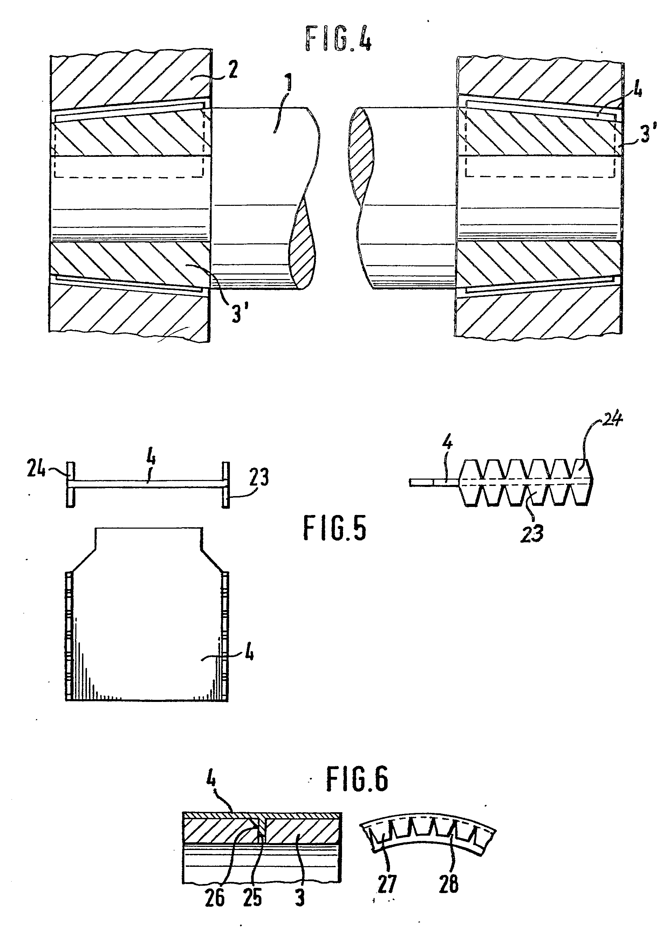

Fig. 4 zeigt eine Lagerung von zwei Lagerzapfen 1 einer durchgehenden Welle, bei der nicht nur radiale, sondern auch axiale Kräfte auf einfache Weise aufgenommen werden können, indem die beiden Lagerzapfen konisch auslaufen. Dazu sind sie am Ende abgesetzt und nehmen entsprechend konisch ausgebildete Lagerhülsen 3', die wiederum mit Folienabschnitten 4 bestückt sind, auf.

In Fig. 5 ist eine Ausbildung der Folienabschnitte 4 dargestellt, die sich von der nach Fig. 1 dadurch unterscheidet, daß an den beiden über die Lagerhülse hinausstehenden Enden jeweils nach innen vorstehende Stege 23 sowie nach außen vorstehende Stege 24 angeformt sind.

Fig. 6 zeigt eine Bauweise, welche vorzugsweise bei beengten Raumverhältnissen angewendet wird. Für die axiale Festlegung der Folienabschnitte 4 dienen nach innen vorstehende Stege 26, die in einen entsprechend langen Umfangsschlitz 25 der Lagerhülse 3 eingreifen. Die einzelnen Stege 26 sind jeweils in fünf Lappen 27 mittels Einschnitten 28 auf aufgeteilt, um die radiale Flexibilität der Folienabschnitte zu erhalten. Die Lagerhülse 3 kann auch in zwei Hülsenhälften zu jeder Seite des Schlitzes 25 aufgeteilt sein.

**Patentansprüche**

1. Foliengleitlager, insbesondere für durch die zu pumpende Flüssigkeit zu schmierende stopfbüchslose Chemiepumpen (Spaltrohrpumpen), mit einer zwischen einem Lagerzapfen (1) oder einer Welle und einem gleichachsigen zylindrischen oder leicht konischen Lagergehäuse (2) vorgesehenen Lagerhülse (3), an der mehrere sich in Umfangsrichtung erstreckende Gleitfolienabschnitte (4) aus Kunststoff jeweils in Drehrichtung gesehen am vorderen Ende in in der Lagerhülse ausgebildeten Axialschlitzen (5) gehalten sind, dadurch gekennzeichnet, daß die Folienabschnitte (4) am Außenumfang der Lagerhülse (3) in nicht bis zu den Rändern der Lagerhülse reichenden Axialschlitzen (5) gehalten sind, am hinteren Ende gegenüber den benachbarten Folienabschnitten (4) ohne Überlappung einen Dehnungsspalt belassen und frei auf der Mantelfläche der Lagerhülse (3) aufliegen können, daß die Lagerhülse (3) mit dem Lagerzapfen (1) bzw. mit der Welle drehfest verbunden ist, und daß zwischen den frei aufliegenden Folienabschnitten (4) und der Lagerfläche des Lagergehäuses (2) ein radiales Gleitspiel (14) von etwa 0,3 – 1 mm vorgesehen ist.

2. Geleitlager nach Anspruch 1, dadurch gekennzeichnet, daß die vorderen Enden (11) der Folienabschnitte (4) durch die Axialschlitze (5) bis auf den Innenumfang der Lagerhülse (3) reichen.

3. Gleitlager nach Anspruch 1 oder 2, dadurch gekennzeichnet, daß die in Drehrichtung hinteren Oberkanten (6) der Axialschlitze (5) abgerundet sind.

4. Gleitlager nach einem der Ansprüche 1−3, dadurch gekennzeichnet, daß im hinteren Ende (12) der Folienabschnitte (4) auf deren Innenseite achsparallel ein Stab (16) zur Gewichtserhöhung eingebunden ist und auf dem Außenumfang der Lagerhülse (3) eine die dadurch hervorgerufene Verdickung der Folienabschnitte (4) aufnehmende Längsnut (17) ausgebildet ist.

5. Gleitlager nach einem der Ansprüche 1−4, dadurch gekennzeichnet, daß parallel zu den Axialschlitzen (5) in bestimmtem Abstand Schmiermitteldurchtrittsöffnungen (7) in der Lagerhülse (3) vorgesehen sind.

6. Gleitlager nach einem der Ansprüche 1−5, dadurch gekennzeichnet, daß die Folienabschnitte (4) wenigstens an einer Seite axial über die Lagerhülse (3) vorstehen und am Lagergehäuse (2) wenigstens eine radiale Anlageschulter (Begrenzungsscheibe 13) ausgebildet ist.

7. Gleitlager nach Anspruch 6, dadurch gekennzeichnet, daß an den Seiten der Folienabschnitte (4) radial geschlitzte Radialstege (23, 24) angeformt sind, die an den Stirnflächen der Lagerhülse (3) anliegen (Fig. 5).

8. Gleitlager nach einem der Ansprüche 1−5, dadurch gekennzeichnet, daß zur Axialsicherung in einem Umfangsschlitz (25) der Lagerhülse (3) eingreifende, radial geschlitze Stege (26) an die Folienabschnitte (24) angeformt sind (Fig. 6).

## Claims

1. Foil slide bearing, particularly for glandless chemical pumps (slotted tube pumps) which are to be lubricated by the fluid which is to be pumped, with a bearing sleeve (3), which is provided between a journal (1) or a shaft and a coaxial, cylindrical or slightly conical bearing housing (2) and at which several plastic sliding foil sections (4), which extend in the circumferential direction, are in each case held at the front end, when viewed in the direction of rotation, in axial slots (5) formed in the bearing sleeve, characterised in that the foil sections (4) are held at the outer circumference of the bearing sleeve (3) in axial slots (5), which do not extend to the edges of the bearing sleeve, which sections leave an expansion gap, without overlapping, at the rear end with respect to the adjacent foil sections (4) and can rest freely on the surface of the bearing sleeve (3), that the bearing sleeve (3) is non-rotationally connected to the journal (1) or the shaft and that a radial slide clearance (14) of approximately 0.3−1 mm is provided between the freely supported foil sections (4) and the bearing surface of the bearing housing (2).

2. Slide bearing according to claim 1, characterised in that the font ends (11) of the foil sections (4) extend through the axial slots (5) as far as the inner circumference of the bearing sleeve (3).

3. Slide bearing according to claim 1 or 2, characterised in that the rear upper edges (16) — viewed in the direction of rotation — of the axial slots (5) are rounded.

4. Slide bearing according to one of claims 1−3, characterised in that a bar (16) is bonded in an axially parallel manner in the rear end (12) of the foil sections (4) on the inner side thereof in order to increase the weight and a longitudinal groove (17), which accomodates the enlargement of the foil sections (4) thus produced, is formed on the outer circumference of the bearing sleeve (3).

5. Slide bearing according to one of claims 1−4, characterised in that lubricant openings (7) having a certain spacing are provided in the bearing sleeve (3) parallel to the axial slots (5).

6. Slide bearing according to one of claims 1−5, characterised in that the foil sections (4) project axially over the bearing sleeve (3) at least at one side and at least one radial abutment shoulder (limiting disc 13) is formed on the bearing housing (2).

7. Slide bearing according to claim 6, characterised in that radially slotted radial bars (23, 24) are formed onto the sides of the foil sections (4) and rest against the front surfaces fo the bearing sleeve (3) (Fig. 5).

8. Slide bearing according to one of claims 1−5, characterised in that radially slotted bars (26), which engage in a circumferential slot (25) of the bearing sleeve (3), are formed onto the foil sections (24) for the purpose of axial locking (figure 6).

## Revendications

1. Palier lisse à feuille, notamment pour des pompes à produits chimiques (pompes à moteur à gaine) sans presse-étoupe, devant être lubrifiées par le liquide à pomper, comportant un manchon (3) prévu entre un tourillon (1) ou un arbre et un logement de palier (2) de même axe, cylindrique ou légèrement conique, et sur lequel plusieurs éléments (4) de feuille de glissement en matière plastique s'étendant suivant la direction périphérique sont maintenus sur leur extrémité avant, considérée suivant le sens de rotation, dans des fentes axiales (5) ménagées dans ledit manchon, caractérisé en ce que les éléments de fueille (4) sont maintenus sur le pourtour extérieur du manchon de palier (3) dans des fentes axiales (5) ne s'étendant pas jusqu'au niveau du bord dudit manchon, laissent subsister une fente de dilatation, sans chevauchement, sur leur extrémité arrière par rapport à l'élément voisin de feuille (4) et peuvent être appliqués librement sur la surface enveloppe du manchon (3), que ce dernier est relié avec blocage en rotation au tourillon (1) ou à l'arbre et qu'il est prévu entre les éléments de feuille (4) reposant librement sur la surface du logement de palier (2) un jeu de glissement radial (14) d'environ 0,3 – 1 mm.

2. Palier de glissement selon la revendication 1, caractérisé en ce que les extrémités avant (11) des éléments de feuille (4) s'étendent à travers les fentes axiales (5) jusque sur le pourtour intérieur du manchon de palier (3).

3. Palier lisse selon l'une quelconque des revendications 1 ou 2, caractérisé en ce que les arêtes supérieures (6), situées en arrière suivant le sens de rotation, des fentes axiales (5) sont arrondies.

4. Palier lisse selon l'une quelconque des revendications 1 à 3, caractérisé en ce qu'une barrette (16) fournissant un accroissement de poids est fixée d'un seul tenant à l'extrémité arrière (12) des éléments de feuille (4), sur la face intérieure de ces derniers, en étant parallèle à l'axe, et qu'une rainure longitudinale (17) logeant la partie épaissie, ainsi créée, des éléments de feuille (4) est ménagée sur le pourtour extérieur du manchon (3).

5. Palier lisse selon l'une quelconque des revendications 1 à 4, caractérisé en ce que des orifices (7) de passage du lubrifiant sont prévus dans le manchon de palier (3) parallèlement aux fentes axiales (5) et à des intervalles déterminés.

6. Palier lisse selon l'une quelconque des revendications 1 à 5, caractérisé en ce que les éléments de feuille (4) font saillie au moins axialement sur un côté au-delà du manchon (3) et qu'au moins un épaulement radial de butée (disque de limitation 13) est formé sur le logement de palier (2).

7. Palier lisse selon la revendication 6, caractérisé en ce que sur les faces des éléments de feuille (4) sont réalisées par moulage des barrettes radiales (23, 24) fendues radialement et qui s'appliquent contre les faces frontales du manchon (3).

8. Palier lisse selon l'une quelconque des revendications 1 à 5, caractérisé en ce que des barrettes (26) fendues radialement et s'engageant dans une fente périphérique (25) du manchon (3) sont réalisées par moulage sur les éléments de feuille (24) afin de réaliser le blocage axial.

# FIG.1

# FIG.2

# FIG.3

FIG.4

FIG.5

FIG.6